# DEMANDE DE BREVET EUROPEEN

(11) **EP 4 321 321 A1**
(43) Date de publication de la demande: **14.02.2024**
(21) Numéro de dépôt: 23189581.4
(22) Date de dépôt: 03.08.2023
(51) Int. Cl.: B29C 45/16, B29C 45/26, B60G 7/00, F16F 1/38, B29K 75/00, B29K 77/00

(54) **PROCEDE DE FABRICATION D'UNE ARTICULATION ELASTIQUE PAR INJECTION BI-MATIERE**

(30) Priorité: 09.08.2022 FR 2208185
(71) Demandeur: ContiTech Vibration Control GmbH, 30165 Hannover (DE)
(72) Inventeur: JEANNEAU, Yann, 31100 TOULOUSE (FR); JEANNEAU, Isabelle, 31100 TOULOUSE (FR)
(74) Mandataire: Continental Automotive France

(57) **Abrégé**

L'invention concerne un procédé de fabrication d'une articulation (10a, 10b) élastique qui comprend une bague externe (12a, 12b) qui s'étend axialement autour d'un axe d'articulation qui est prévue pour être reliée sur un premier élément à articuler, une bague interne (28a, 28b) qui s'étend axialement suivant l'axe d'articulation au sein de la bague externe (12a, 12b) et qui est prévue pour être reliée sur un second élément à articuler, et un élément intercalaire (16b) déformable élastiquement qui relie la bague interne (28b) sur la bague externe (12b), en permettant une mobilité axiale et radiale de la bague interne (28b), le procédé étant caractérisé en ce qu'il comprend au moins une étape de moulage de la bague externe (12a, 12b) et de la bague interne (28a, 28b) de l'articulation (10a, 10b), qui consiste à injecter un premier matériau dans une première cavité (56) d'un moule (50), et une étape de moulage de l'élément intercalaire (16b) de l'articulation (10b), qui consiste à injecter un second matériau dans une seconde cavité (58) dudit moule (50) entre la bague externe (12b) et la bague interne (28b) précédemment formée.

## Description

### Domaine technique

La présente demande de brevet se rapporte au domaine de la fabrication d'une articulation élastique par injection bi-matière.

La présente invention trouvera de façon non-exclusive des applications avantageuses dans le domaine de l'automobile dans lequel des articulations élastiques peuvent équiper un dispositif de train de roulement, par exemple pour relier un bras oscillant de suspension sur le châssis d'un véhicule automobile, ou un dispositif de support d'un moteur d'un véhicule automobile, afin de filtrer les vibrations transmises entre le moteur et le châssis du véhicule.

### Etat de la technique antérieure

Il est connu d'interposer une articulation élastique entre un premier élément et un second élément d'un mécanisme, notamment pour remplir une fonction d'amortissement et de filtrage des vibrations entre ces deux éléments.

Typiquement, une articulation élastique peut être interposée entre un bras de suspension et un support de roue d'un véhicule, ou entre un moteur et le châssis d'un véhicule.

On connaît de l'état de la technique une articulation élastique comportant une bague externe, un noyau interne et un élément intercalaire élastique qui est interposé entre la bague externe et le noyau interne.

La bague externe s'étend axialement autour d'un axe d'articulation et elle est délimitée par une face interne et une face externe.

La bague externe est prévue pour être reliée sur un premier élément à articuler, comme un bloc moteur.

Le noyau interne de l'articulation s'étend axialement suivant l'axe d'articulation au sein de la bague externe, et il comprend une bague interne qui est solidaire d'un insert.

Le noyau est prévu pour accueillir un second élément à articuler, comme une tige d'articulation reliée sur le châssis du véhicule.

Ce type d'articulation est conçue pour absorber des efforts axiaux suivant l'axe d'articulation, et des efforts radiaux perpendiculaires à l'axe d'articulation.

A cet effet, l'élément intercalaire est déformable élastiquement et il relie le noyau interne sur la bague externe, en permettant une mobilité axiale et radiale relative du noyau interne par rapport à la bague externe.

Dans ce but, l'élément intercalaire est généralement réalisé en matériau du type élastomère.

Typiquement, l'articulation selon l'art antérieur précédemment décrite est fabriquée au moyen d'un procédé qui comporte une première étape qui consiste à mouler la bague externe en injectant un matériau thermoplastique dans un premier moule, et une deuxième étape qui consiste à surmouler la bague interne du noyau en injectant un matériau thermoplastique dans un second moule, autour de l'insert associé.

Après un délai de refroidissement, la bague externe est éjectée du premier moule, et l'ensemble formant le noyau, qui comprend la bague périphérique et l'insert, est éjecté du second moule.

La deuxième étape du procédé selon l'art antérieur est suivie par une troisième étape de surmoulage qui consiste à agencer la bague externe et le noyau dans un troisième moule, puis à injecter un matériau thermoplastique dans le troisième moule entre la bague externe et la bague interne du noyau, pour former l'élément intercalaire.

Pour assurer la liaison entre l'élément intercalaire et la bague externe, et entre l'élément intercalaire et la bague interne du noyau, le procédé selon l'art antérieur comporte une étape d'encollage qui est réalisée avant la troisième étape.

Cette étape d'encollage consiste à encoller la face de la bague externe qui est en contact avec l'élément intercalaire et d'encoller la face de la bague interne qui est en contact avec l'élément intercalaire.

Un inconvénient du procédé selon l'art antérieur précédemment décrit concerne l'utilisation d'un adhésif pour encoller la bague externe et la bague interne sur l'élément intercalaire.

En effet, un tel adhésif est onéreux et contient parfois des éléments dangereux pour l'environnement qui sont interdits par certaines législations.

Pour pallier l'utilisation d'adhésif, il est connu d'assembler mécaniquement la bague externe et la bague interne sur l'élément intercalaire.

Cette alternative de liaison par assemblage mécanique demande une étape chronophage d'assemblage et peut parfois souffrir d'une déformation dans le temps et d'un manque de rigidité.

### Exposé de l'invention

La présente invention a notamment pour but de pallier les inconvénients de l'art antérieur en proposant un procédé de fabrication d'une articulation élastique, qui assure une liaison fiable entre la bague externe et la bague interne sur l'élément intercalaire, sans utiliser d'adhésif.

On atteint cet objectif, ainsi que d'autres qui apparaîtront à la lecture de la description qui suit, avec un procédé de fabrication d'une articulation élastique qui comprend :
- une bague externe qui s'étend axialement autour d'un axe d'articulation et qui est délimitée radialement par une face interne et une face externe, ladite bague étant prévue pour être reliée sur un premier élément à articuler,
- une bague interne qui s'étend axialement suivant l'axe d'articulation au sein de la bague externe et qui est prévue pour être reliée sur un second élément à articuler, et
- un élément intercalaire déformable élastiquement qui relie la bague interne sur la bague externe, en permettant une mobilité axiale et radiale de la bague interne,

le procédé étant caractérisé en ce qu'il comprend au moins :
- une étape de moulage de la bague externe et de la bague interne de l'articulation, qui consiste à injecter un premier matériau dans une première cavité d'un moule, et
- une étape de moulage de l'élément intercalaire de l'articulation, qui consiste à injecter un second matériau dans une seconde cavité dudit moule entre la bague externe et la bague interne précédemment formée.

Le procédé selon l'invention permet une adhésion entre l'élément intercalaire et la bague externe, et entre l'élément intercalaire et la bague interne, en moulant, ou surmoulant, l'élément intercalaire sur la bague externe et la bague interne alors que ces dernières sont encore chaudes.

La chaleur de la bague externe et de la bague interne permet un lien chimique, ou pontage chimique, avec l'élément intercalaire.

Cette caractéristique de l'invention est permise par l'utilisation d'un même moule pour réaliser l'étape de moulage de la bague externe et de la bague interne de l'articulation, et pour réaliser l'étape de moulage de l'élément intercalaire de l'articulation.

Suivant d'autres caractéristiques optionnelles de l'invention, prises seules ou en combinaison :
- le procédé comprend une phase préalable qui consiste à agencer un insert dans la première cavité du moule avant de mouler la bague interne, la bague interne étant surmoulée autour dudit insert pour former un noyau adapté pour être relié sur ledit second élément à articuler. L'insert permet de renforcer la résistance mécanique du noyau ;
- l'insert du noyau délimite une gorge annulaire et la bague interne, après moulage sur ledit insert, comporte une collerette qui est logée dans ladite gorge de forme complémentaire. Cette caractéristique permet de solidariser axialement la bague interne sur l'insert du noyau, de façon mécanique ;
- l'insert du noyau est réalisé en métal ;
- le second matériau injecté pour former l'élément intercalaire est du polyuréthane thermoplastique. Le polyuréthane présente des caractéristiques de filtration et d'absorption qui sont particulièrement adaptées à son utilisation dans la fabrication d'une articulation élastique.
- le premier matériau injecté pour former la bague externe et la bague interne est du polyamide ;
- le second matériau injecté pour former l'élément intercalaire comporte un agent de liaison qui est adapté pour favoriser une liaison chimique entre ledit élément intercalaire et la bague externe et entre ledit élément intercalaire et la bague interne ;
- il comporte une étape de transfert de la bague externe et du noyau de l'articulation, depuis la première cavité jusqu'à la seconde cavité du moule, étape qui est réalisée avant le moulage de l'élément intercalaire ;
- ladite étape de moulage de la bague externe et de la bague interne de l'articulation est réalisée au cours d'un premier cycle de fabrication, et ladite étape de moulage de l'élément intercalaire de l'articulation est réalisée au cours d'un second cycle suivant de fabrication ;

L'invention concerne également une articulation élastique qui comprend :
- une bague externe qui s'étend axialement autour d'un axe d'articulation et qui est délimitée par une face interne et une face externe, ladite bague étant prévue pour être reliée sur un premier élément à articuler,
- une bague interne qui s'étend axialement suivant l'axe d'articulation à l'intérieur de la bague externe et qui est prévue pour être reliée sur un second élément à articuler, et
- un élément intercalaire déformable élastiquement qui relie la bague interne sur la bague externe, en permettant la mobilité axiale et radiale de la bague interne,

caractérisée en ce qu'elle est réalisée suivant le procédé décrit précédemment.

### Description des dessins

D'autres caractéristiques et avantages de l'invention ressortiront à la lecture de la description qui suit, en référence aux figures annexées, qui illustrent :
Figure 1 : une vue en perspective d'une articulation élastique réalisée suivant le procédé selon l'invention ;
Figure 2 : une vue en coupe axiale de l'articulation élastique de la figure 1 ;
Figure 3 : une vue schématique en section axiale du moule en position ouverte pour la mise en oeuvre de la première étape de fabrication du procédé selon l'invention ;
Figure 4 : une vue schématique, similaire à celle de la figure 3, du moule en position fermée pour la mise en oeuvre de la deuxième étape de fabrication du procédé selon l'invention ;
Figure 5 une vue schématique, similaire à celle de la figure 3, du moule en position fermée pour la mise en oeuvre des troisième et quatrième étapes de fabrication du procédé selon l'invention ;
Figure 6 : une vue schématique, similaire à celle de la figure 3, du moule en position ouverte pour la mise en oeuvre de la cinquième étape de fabrication du procédé selon l'invention.

Dans la description et les revendications, on adoptera à titre non limitatif la terminologie longitudinal, vertical et transversal en référence au trièdre L, V, T indiqué aux figures.

Aussi, on utilisera à titre non limitatif les expressions « radiale » et « axiale » en référence à l'axe A d'articulation représenté sur les figures.

Sur l'ensemble de ces figures, les éléments identiques ou similaires sont repérés par des signes de référence identiques ou similaires.

### Description des modes de réalisation

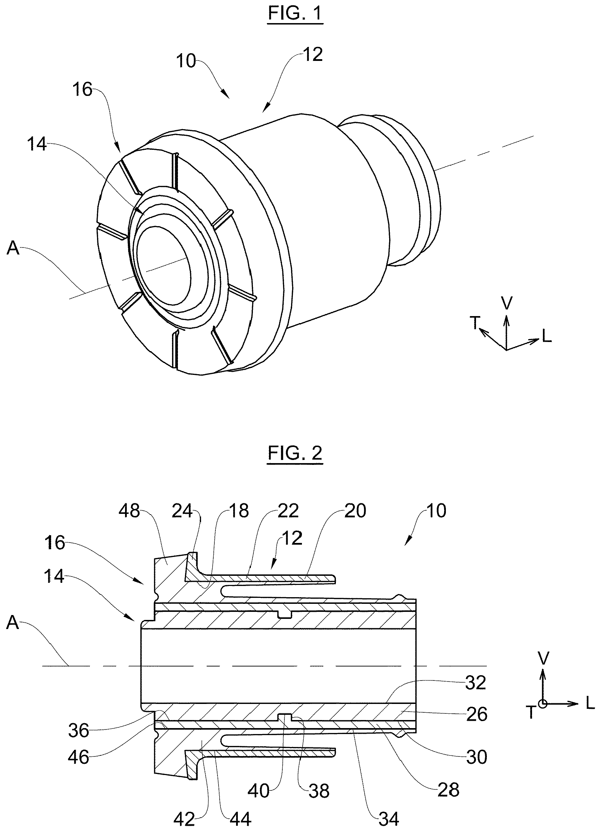

On a représenté aux figure 1 et 2, une articulation 10 élastique qui comprend une bague externe 12, un noyau 14 et un élément intercalaire 16 déformable élastiquement qui relie le noyau 14 sur la bague externe 12, en permettant une mobilité axiale et radiale relative de la bague externe 12 par rapport au noyau 14.

La bague externe 12, le noyau 14 et l'élément intercalaire 16 s'étendent chacun axialement d'avant en arrière, autour d'un axe A d'articulation longitudinal.

Comme on peut le voir à la figure 2, la bague externe 12 est délimitée par une face interne 18 agencée en regard du noyau 14, et par une face externe 20 opposée.

Aussi, la bague externe 12 comprend un corps 22 globalement cylindrique et une collerette 24 annulaire qui s'étend radialement sur une extrémité axiale avant du corps 22, autour de l'axe A.

La bague externe 12 est prévue pour être reliée sur un premier élément à articuler (non représenté), comme un bloc moteur.

Le noyau 14 présente une forme tubulaire qui s'étend axialement suivant l'axe A d'articulation.

De plus, le noyau 14 comprend un insert 26 et une bague interne 28 qui s'étend autour de l'insert 26.

L'insert 26 du noyau 14 est délimité radialement par une face périphérique 30 et une face interne 32.

De même, la bague interne 28 est délimitée radialement par une face périphérique 34 et une face interne 36 qui épouse la face périphérique 30 de l'insert 26.

En référence à la figure 2, la face périphérique 30 de l'insert 26 délimite une gorge 38 annulaire qui s'étend autour de l'axe A d'articulation.

De façon complémentaire, la bague interne 28 comporte une collerette 40 annulaire qui s'étend autour de l'axe A d'articulation et qui est logée dans la gorge 38 de forme complémentaire.

Cette caractéristique permet de solidariser axialement la bague interne 28 sur l'insert 26 du noyau 14, de façon mécanique.

Aussi, le noyau 14 est prévu pour être relié sur un second élément à articuler (non représenté), comme une tige d'articulation reliée sur le châssis du véhicule.

De préférence, le noyau 14 est réalisé en matériau métallique pour favoriser sa tenue mécanique dans le temps.

Toujours en référence à la figure 2, l'élément intercalaire 16 est interposé radialement entre la bague externe 12 et la bague interne 28 du noyau 14, de façon à relier et solidariser la bague externe 12 sur le noyau 14.

L'élément intercalaire 16 comporte une première portion 42 globalement tubulaire qui s'étend axialement suivant l'axe A d'articulation et qui présente une première face 44 solidaire de la face interne 18 de la bague externe 12, et une seconde face 46 solidaire de la bague interne 28 du noyau 14.

De plus, l'élément intercalaire 16 comporte une collerette 48 annulaire qui s'étend radialement sur une extrémité axiale avant de la première portion 42 de l'élément intercalaire 16.

On notera que la collerette 48 de l'élément intercalaire 16 est en appui axial sur la collerette 24 de la bague externe 12.

Selon un exemple préféré de réalisation de l'invention, la bague externe 12 et la bague interne 28 sont réalisées par moulage avec un premier matériau qui est du polyamide.

Aussi, l'élément intercalaire 16 est réalisé par moulage avec un second matériau qui est du polyuréthane thermoplastique.

Le polyuréthane présente des caractéristiques de filtration et d'absorption qui sont particulièrement adaptées à son utilisation dans la fabrication d'une articulation élastique 10.

En effet, à iso dureté, le polyuréthane est plus filtrant que du caoutchouc.

De plus, le polyuréthane permet d'être moulé à plus forte épaisseur qu'un thermoplastique vulcanisable, ce dernier risquant de se contracter en refroidissant.

Afin de permettre une adhésion entre l'élément intercalaire 16 et la face interne 18 de la bague externe 12, et entre l'élément intercalaire 16 et la face périphérique 34 de la bague interne 28 du noyau 14, l'élément intercalaire 16 est moulé, ou surmoulé, sur la bague externe 12 et la bague interne 28 alors que ces dernières sont encore chaudes.

La chaleur de la bague externe 12 et de la bague interne 28 permet un lien chimique, ou pontage chimique, avec l'élément intercalaire 16.

De plus, le second matériau qui forme l'élément intercalaire 16 comporte un adjuvant qui forme un agent de liaison conçu pour favoriser le lien chimique avec le premier matériau qui forme la bague externe 12 et la bague interne 28.

A titre d'exemple, l'agent de liaison comporte un concentré aromatique contenant des isocyanates.

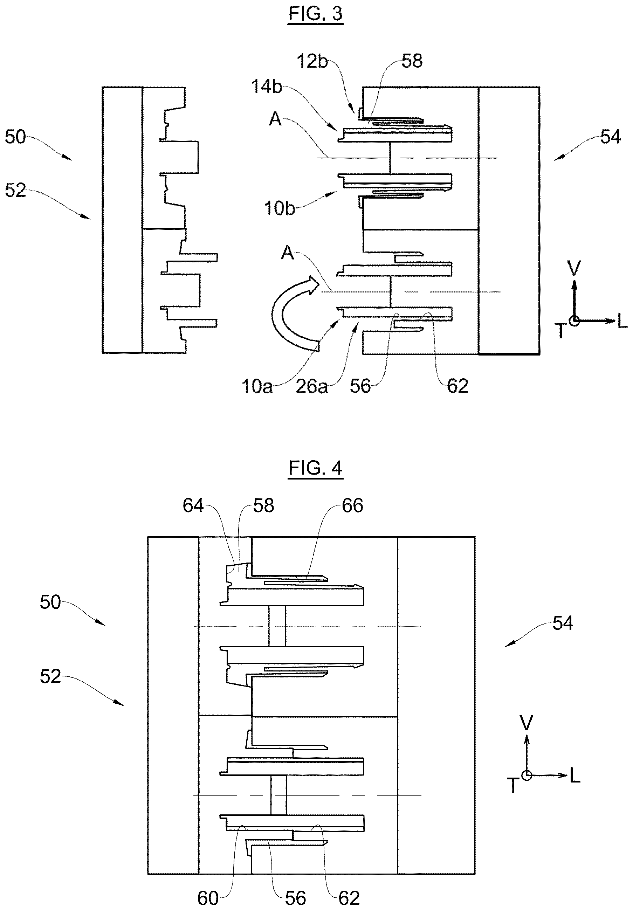

L'articulation 10 élastique décrite précédemment est fabriquée suivant un procédé de fabrication selon l'invention, dont un exemple de mise en oeuvre est décrit ci-dessous en référence aux figures 3 à 6.

Plus particulièrement, le procédé selon l'invention permet de fabriquer simultanément, au cours d'un même cycle courant, une partie d'une première articulation référencée 10a, et une partie d'une seconde articulation référencée 10b.

La première articulation 10a et la seconde articulation 10b sont identiques à l'articulation 10 décrite précédemment.

Dans la suite de la description, et en référence aux figures 3 à 6, les références des éléments qui appartiennent à la première articulation 10a et à la seconde articulation 10b sont distingués par la lettre « a » et par la lettre « b » respectivement.

Le procédé selon l'invention est mis en oeuvre au moyen d'un moule 50 monté sur une presse (non représentée) qui est adaptée pour réaliser un moulage par injection bi-matière, aussi appelé moulage bi-injection.

Un tel procédé de fabrication par injection bi-matière permet de produire une pièce composée de deux matières aux caractéristiques différentes, sur une seule presse et avec un seul moule.

A cet effet, le moule 50 comporte une première coquille 52 fixe et une seconde coquille 54 mobile.

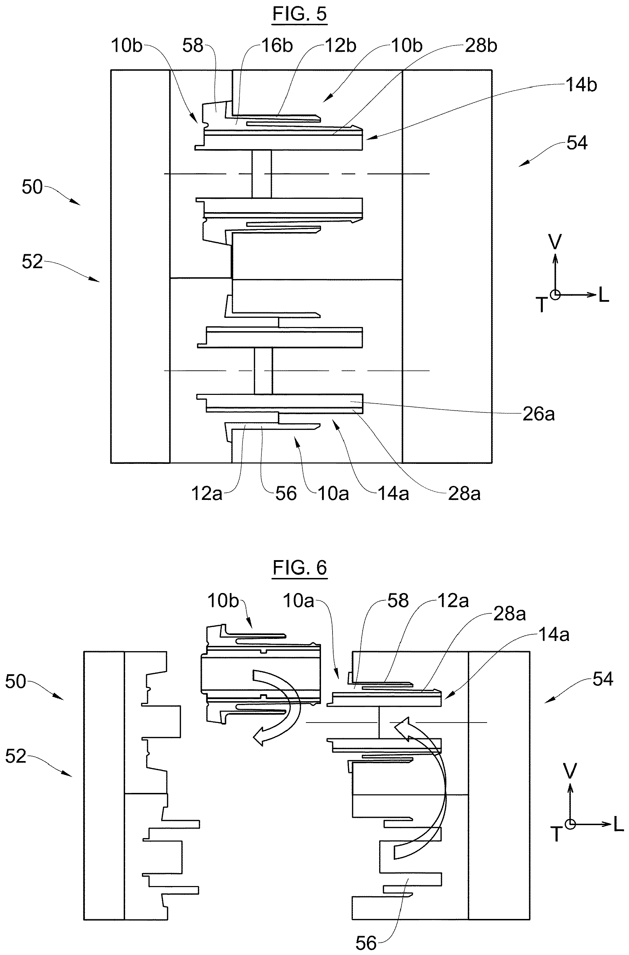

La seconde coquille 54 est montée coulissante axialement suivant l'axe A de l'articulation 10, entre une position d'éjection illustrée aux figures 3 et 6, correspondant à une position ouverte du moule 50, et une position d'injection illustrée aux figures 4 et 5, correspondant à une position fermée du moule 50.

Comme on peut le voir à la figure 4 le moule 50 délimite, dans sa position fermée, une première cavité 56 et une seconde cavité 58.

La première cavité 56 est délimitée par une première empreinte 60 formée par la première coquille 52 du moule 50 et par une deuxième empreinte 62 formée par la seconde coquille 54 mobile.

De même, la seconde cavité 58 est délimitée par une troisième empreinte 64 formée par la première coquille 52 du moule 50 et par une quatrième empreinte 66 formée par la seconde coquille 54 mobile.

Le procédé de fabrication de l'articulation 10 selon l'invention comporte une première étape qui consiste à ouvrir le moule 50 puis à agencer l'insert 26a de la première articulation 10a dans la première cavité 56 du moule 50, comme illustré à la figure 3.

On notera que, à ce stade du procédé, la deuxième cavité 58 du moule 50 loge la bague externe 12b et du noyau 14b de la seconde articulation 10b réalisée au cours d'un cycle précédent.

A la suite de la première étape, le procédé comporte une deuxième étape qui consiste à entraîner le moule 50 dans sa position fermée comme illustré à la figure 4.

La deuxième étape est suivie par une troisième étape illustrée à la figure 5, qui consiste à injecter le premier matériau dans la première cavité 56 du moule 50 pour mouler la bague externe 12a de la première articulation 10a, et dans le même temps, pour surmouler la bague interne 28a de la première articulation 10a autour de l'insert 26a, pour former le noyau 14a de la première articulation 10a.

Pour rappel, le premier matériau est du polyamide.

De plus, toujours selon la figure 5, le procédé comporte une quatrième étape au cours de laquelle le second matériau est injecté dans la seconde cavité 58 du moule 50 pour mouler l'élément intercalaire 16b de la seconde articulation 10b, entre la bague externe 12b et la bague interne 28b du noyau 14b de la seconde articulation 10b.

Pour rappel, le second matériau est du polyuréthane.

De préférence, la troisième étape et la quatrième étape du procédé sont réalisées en même temps.

La quatrième étape est réalisée alors que la bague externe 12b et la bague interne 28b du noyau 14b de la seconde articulation 10b sont encore chaudes, de sorte que la chaleur de la bague externe 12b et de la bague interne 28b permette un lien chimique, ou pontage chimique, avec l'élément intercalaire 16b associé.

A cet effet, l'ensemble moulé au cours de la troisième étape du cycle précédent, qui comprend la bague externe 12b et la bague interne 28b de la seconde articulation 10b, a été transféré rapidement depuis la première cavité 56 jusqu'à la seconde cavité 58 du moule 50, au cours d'une cinquième étape du cycle précédent, cinquième étape décrite par la suite.

De plus, la seconde cavité 58 est chauffée par l'injection du second matériau au cours du cycle précédent, ce qui permet de réchauffer la bague externe 12b et la bague interne 28b de la seconde articulation 10b avant l'injection de la bauge intercalaire 16b.

La chaleur de la bague externe et de la bague interne qui permet un lien chimique avec l'élément intercalaire associé est par exemple de cent degrés Celsius.

A la suite de la troisième étape et de la quatrième étape, le procédé comporte une cinquième étape illustrée à la figure 6, au cours de laquelle le moule 50 est entraîné dans sa position ouverte.

Après l'ouverture du moule 50, la cinquième étape consiste à éjecter la seconde articulation 10b pour libérer la seconde cavité 58.

De plus, la cinquième étape consiste à transférer la bague externe 12a et le noyau 14a de la première articulation 10a, depuis la première cavité 56 jusqu'à la seconde cavité 58 du moule 50 pour pouvoir amorcer un futur cycle de fabrication en reprenant le procédé à la première étape.

Ce futur cycle consistera à achever la première articulation 10a en injectant l'élément intercalaire manquant (non représenté), et consistera aussi à commencer une troisième articulation (non représentée).

On notera que la proximité entre la première cavité 56 et la seconde cavité 58 du moule 50 permet un transfert rapide des pièces au cours de la cinquième étape.

Cet avantage découle de la mise en oeuvre du procédé selon l'invention qui est réalisée au moyen d'un seul moule 50.

Le transfert de la bague externe 12a et du noyau 14a de la première articulation 10a, depuis la première cavité 56 jusqu'à la seconde cavité 58 du moule 50, est réalisé par exemple au moyen d'un bras robotisé.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Par exemple, le transfert de la bague externe 12a et du noyau 14a de la première articulation 10a, depuis la première cavité 56 jusqu'à la seconde cavité 58 du moule 50, réalisé au cours de la cinquième étape, peut être réalisé par une rotation d'une partie du moule 50 qui porte les pièces plutôt que de les transférer par un robot.

Cette variante de réalisation demande une adaptation du moule 50 qui est à la portée de l'homme du métier.

Aussi, cette variante de réalisation favorise la conservation de la chaleur de la bague externe 12a et du noyau 14a avant le surmoulage de l'élément intercalaire de la première articulation 10a.

## Revendications

1. Procédé de fabrication d'une articulation (10, 10a, 10b) élastique qui comprend :
• une bague externe (12, 12a, 12b) qui s'étend axialement autour d'un axe (A) d'articulation et qui est délimitée radialement par une face interne (18) et une face externe (20), ladite bague externe (12, 12a, 12b) étant prévue pour être reliée sur un premier élément à articuler,
• une bague interne (28, 28a, 28b) qui s'étend axialement suivant l'axe (A) d'articulation au sein de la bague externe (12, 12a, 12b) et qui est prévue pour être reliée sur un second élément à articuler, et
• un élément intercalaire (16, 16b) déformable élastiquement qui relie la bague interne (28, 28b) sur la bague externe (12, 12b), en permettant une mobilité axiale et radiale de la bague interne (28, 28b),
le procédé étant **caractérisé en ce qu'**il comprend au moins :
• une étape de moulage de la bague externe (12, 12a, 12b) et de la bague interne (28, 28a, 28b) de l'articulation (10, 10a, 10b), qui consiste à injecter un premier matériau dans une première cavité (56) d'un moule (50), et
• une étape de moulage de l'élément intercalaire (16, 16b) de l'articulation (10, 10b), qui consiste à injecter un second matériau dans une seconde cavité (58) dudit moule (50) entre la bague externe (12, 12b) et la bague interne (28, 28b) précédemment formée,
et **en ce que** le procédé comprend une phase préalable qui consiste à agencer un insert (26, 26a, 26b) dans la première cavité (56) du moule (50) avant de mouler la bague interne (28, 28a, 28b), la bague interne (28, 28a, 28b) étant surmoulée autour dudit insert (26, 26a, 26b) pour former un noyau (14, 14a, 14b) adapté pour être relié sur ledit second élément à articuler,
et **en ce que** l'insert (26) du noyau (14) délimite une gorge (38) annulaire et la bague interne (28), après moulage sur ledit insert (26), comporte une collerette (40) qui est logée dans ladite gorge (38) de forme complémentaire.

2. Procédé de fabrication d'une articulation (10, 10a, 10b) élastique selon la revendication 1, **caractérisé en ce que** l'insert (26, 26a, 26b) du noyau (14, 14a, 14b) est réalisé en métal.

3. Procédé de fabrication d'une articulation (10, 10a, 10b) élastique selon l'une quelconque des revendications précédentes, **caractérisé en ce que** le second matériau injecté pour former l'élément intercalaire (16, 16b) est du polyuréthane thermoplastique.

4. Procédé de fabrication d'une articulation (10, 10a, 10b) élastique selon l'une quelconque des revendications précédentes, **caractérisé en ce que** le premier matériau injecté pour former la bague externe (12, 12a, 12b) et la bague interne (28, 28a, 28b) est du polyamide.

5. Procédé de fabrication d'une articulation (10, 10a, 10b) élastique selon l'une quelconque des revendications précédentes, **caractérisé en ce que** le second matériau injecté pour former l'élément intercalaire (16, 16b) comporte un agent de liaison qui est adapté pour favoriser une liaison chimique entre ledit élément intercalaire (16, 16b) et la bague externe (12, 12b) et entre ledit élément intercalaire (16, 16b) et la bague interne (28, 28b).

6. Procédé de fabrication d'une articulation (10, 10a, 10b) élastique selon l'une quelconque des revendications précédentes, **caractérisé en ce qu'**il comporte une étape de transfert de la bague externe (12, 12a, 12b) et du noyau (14, 14a, 14b) de l'articulation (10, 10a, 10b), depuis la première cavité (56) jusqu'à la seconde cavité (58) du moule (50), étape qui est réalisée avant le moulage de l'élément intercalaire (16, 16b).

7. Procédé de fabrication d'une articulation (10, 10a, 10b) élastique selon l'une quelconque des revendications précédentes, **caractérisé en ce que** ladite étape de moulage de la bague externe (12, 12a, 12b) et de la bague interne (28, 28a, 28b) de l'articulation (10, 10a, 10b) est réalisée au cours d'un premier cycle de fabrication, et ladite étape de moulage de l'élément intercalaire (16, 16b) de l'articulation (10, 10a, 10b) est réalisée au cours d'un second cycle suivant de fabrication.

8. Articulation (10, 10a, 10b) élastique qui comprend :
• une bague externe (12, 12a, 12b) qui s'étend axialement autour d'un axe (A) d'articulation et qui est délimitée par une face interne (18) et une face externe (20), ladite bague (12, 12a, 12b) étant prévue pour être reliée sur un premier élément à articuler,
• une bague interne (28, 28a, 28b) qui s'étend axialement suivant l'axe (A) d'articulation à l'intérieur de la bague (12, 12a, 12b) externe et qui est prévue pour être reliée sur un second élément à articuler, et
• un élément intercalaire (16, 16b) déformable élastiquement qui relie la bague interne (28, 28b) sur la bague externe (12, 12b), en permettant la mobilité axiale et radiale de la bague interne (28, 28b),
**caractérisée en ce qu'**elle est réalisée suivant le procédé selon l'une quelconque des revendications précédentes.
